# NEUE EUROPÄISCHE PATENTSCHRIFT

(11) **EP 2 118 247 B2**
(45) Veröffentlichungstag und Bekanntmachung des Hinweises auf die Entscheidung über den Einspruch: **11.05.2022**
(45) Hinweis auf die Patenterteilung: 22.08.2012
(21) Anmeldenummer: 07856386.3
(22) Anmeldetag: 05.12.2007
(51) Int. Cl.: C11B 1/02

(54) **VERBESSERTES VERFAHREN ZUR GEWINNUNG VON ÖL AUS PFLANZENSAMEN**
IMPROVED METHOD FOR RECOVERING OIL FROM PLANT SEEDS
PROCÉDÉ AMÉLIORÉ D'OBTENTION D'HUILE DE GRAINES DE PLANTES

(30) Priorität: 29.12.2006 DE 102006062045
(43) Veröffentlichungstag der Anmeldung: 18.11.2009
(73) Patentinhaber: AB Enzymes GmbH, 64293 Darmstadt (DE)
(72) Erfinder: KÖHLER, Jörg, 26931 Elsfleth (DE); MARSCHNER, Volker, 64404 Bickenbach (DE); WINTER, Bruno, 70190 Stuttgart (DE)
(74) Vertreter: Hiebl, Inge Elisabeth
(86) Internationale Anmeldenummer: PCT/EP2007/010562
(87) Internationale Veröffentlichungsnummer: WO 2008/080495

(56) Entgegenhaltungen:
- WO-A-02/14459
- WO-A-2006/131116
- US-A1- 2005 089 602
- DOMÍNGUEZ, H., NÚÑEZ, M.J., AND LEMA, J.M.: "Enzyme-assisted hexane extraction of soya bean oil." FOOD CHEMISTRY., Bd. 54, 1995, Seiten 223-231, XP002474176 GBELSEVIER SCIENCE PUBLISHERS LTD. in der Anmeldung erwähnt
- DOMÍNGUEZ, H., NÚÑEZ, M.J., AND LEMA, J.M.: "Enzymatic pretreatment to enhance oil extraction from fruits and oilseeds: a review" FOOD CHEMISTRY., Bd. 49, 1994, Seiten 271-286, XP002474177 GBELSEVIER SCIENCE PUBLISHERS LTD. in der Anmeldung erwähnt
- VIELMA, J., RUOHONEN, K., GABAUDAN, J., AND VOGEL, K.: "Top-spraying soybean meal-based diets with phytase improves protein and mineral digestibilities but not lysine utilization in rainbow trout, Oncorynchus mykiss (Walbaum)" AQUACULTURE RESEARCH, Bd. 35, 2004, Seiten 955-964, XP002474178 GBBLACKWELL SCIENCE, OXFORD,

## Beschreibung

Die vorliegende Erfindung betrifft ein verbessertes Verfahren zur Gewinnung von Öl aus Pflanzensamen unter Verwendung von Enzymen. Insbesondere betrifft die Erfindung ein Verfahren, bei dem trockene Ölsaaten mit Enzymen aufgesprüht werden ohne dabei den Feuchtigkeitsgehalt der Ölsaat signifikant zu erhöhen und wonach die Ölsaaten anschließend sofort gepresst werden können.

Ölsaaten wie Sojabohne, Erdnuss, Baumwollsamen, Sonnenblumensamen, Maiskeime und Rapssamen (einschließlich Canola) stellen die Hauptquelle für essbare Pflanzenöle dar. Sie decken mehr als 70% der Weltproduktion an Fetten und Ölen aus pflanzlichen Rohstoffen ab. Sojabohnen sind dabei mit 20% vertreten. Diese Ölsaaten sind nicht nur die Hauptöllieferanten, sondern sind auch sehr gute Quellen für hochwertiges Protein, das häufig auch für Tierernährungszwecke eingesetzt wird.

In den letzten Jahren stieg der Bedarf an pflanzlichen Ölen als Ersatz für fossile Brennstoffe. Besondere Bedeutung haben dabei Sojaöl in Nord- und Südamerika sowie Rapsöl (Doppelnullsorten; 00-Raps, bei dem Erucasäure und Glucosinolate züchterisch entfernt worden sind) in Europa und Kanada gewonnen. Die in Kanada entwickelten und in ganz Nordamerika kultivierten Doppelnull-Rapssorten wurden ursprünglich aus Vermarktungsgründen als *Canola* (**Can**adian **o**il, **l**ow **a**cid) bezeichnet. Mittlerweile wird *Canola* in weiten Teilen Amerikas und Australiens allgemein als Bezeichnung für Raps (eigentlich *Rapeseed*) verstanden. Tatsächlich unterscheidet sich Canola-Raps oder "kanadischer Raps" von den in Europa verbreiteten 00-Sorten. Viele der heutigen Canola-Sorten sind zudem transgen.

Neben seiner Nutzung als Speiseöl und als Rohstoff für Speisefette wird Raps in Deutschland hauptsächlich zur Herstellung technischer Produkte angebaut. Der Anbau von Winterraps in Deutschland zur Ernte 2004 beläuft sich auf rund 1,23 Millionen Hektar, was einer Rapssamenmenge von ca. 3,5 Millionen Tonnen entspricht. Weit über die Hälfte des in Deutschland produzierten Pflanzenöls ist mittlerweile Rapsöl. Weltweit lag die geerntete Menge an Raps in 2004/5 bei 46 Millionen Tonnen mit den Hauptanbaugebieten Europa, Kanada, USA, Australien, China und Indien. Der Anbau von Raps war danach die drittgrößte Ölsaat nach Soja und Palmöl und wird auf ca. 13% der genutzten Ackerfläche angebaut. Die für den Rapsanbau genutzte Anbaufläche steigt weltweit weiter an.

Der Hauptteil des Rapses wird zur Produktion von Rapsölmethylester (RME) eingesetzt, der auch unter dem Begriff Biodiesel bekannt ist. Als Abfallprodukt wird hierbei Glycerin gewonnen.

Da Biodiesel, speziell aus Raps, als nachwachsender Rohstoff eine günstigere CO₂-Bilanz als fossile Brennstoffe aufweist, biologisch abbaubar und stabiler ist als z.B. Sonnenblumenmethylester (SME) und bei der Verbrennung weniger Ruß als Dieselkraftstoff erzeugt, wird seine Produktion weltweit wirtschaftlich stark gefördert. In Europa lag in 2005 die hergestellte Menge an Biodiesel bei 4 Mio t, wovon 50% in Deutschland hergestellt wurden. Weltweit wurden in 2005 ca. 10 Mio t Biodiesel hergestellt. Die jährlichen Anbaumengen an Raps steigen weiter an.

Die Gewinnung von Öl aus Pflanzensaaten kann nach verschiedenen Verfahren durchgeführt werden. Üblicherweise wird das Öl aus der Saat gepresst oder nach Zerkleinerung der Saat mit organischen Lösungsmitteln extrahiert. Es werden auch Kombinationsverfahren verwandt, bei denen nach einem Pressschritt der im Presskuchen verbliebene Ölanteil mit organischen Lösungsmitteln extrahiert wird. Das angewendete Verfahren hängt stark von der weiteren Verwendung des Presskuchens ab. Um als Futtermittel dienen zu können, darf kein organisches Lösungsmittel enthalten sein und der Restölgehalt sollte niedrig sein, um einen optimalen energetischen Wert des eiweißreichen Presskuchens für die Einmischung ins Tierfutter aufzuweisen.

Die Extraktionsmethode hat den Nachteil hoher Anschaffungskosten für die Ausrüstung und hoher laufender Kosten. Zusätzlich stellen die Lösungsmittel (z.B. Hexan) Risiken dar sowohl in der Handhabung, wie auch in gesundheitlicher Hinsicht auf die im Trester enthaltenen Reste. Ein weiterer Nachteil der Extraktionsmethode besteht darin, dass die erzielte Ölqualität nur gering ist. Das Öl enthält hohe Gehalte an Phospholipiden (100 - 600 ppm P), die vor der weiteren Verarbeitung zu entweder Speiseöl oder auch zu Biodiesel entfernt werden müssen. Die zulässigen Grenzwerte liegen in der Speiseölindustrie unter 10 ppm P, bevorzugt unter 5 ppm P, und in der Kraftstoffindustrie unter 14 ppm P, jeweils berechnet als Phosphor. In der Speiseölindustrie dient die Reduktion der Phospholipide der Erhöhung der Lagerstabilität, da die Phospholipide hygroskopisch sind und somit Wasser anziehen, was zu Trübungen im Öl führt. In der Kraftstoffindustrie sind die freigesetzten Phosphorsäuren bei der Verbrennung aggressiv und führen zu schnellerem Verschleiß der Motoren. Ein weiterer Nachteil der Extraktionsmethode für die Anwendung des extrahierten Öls in der Lebensmittelindustrie ist die hohe Farbdichte des Extraktionsöls, die über Adsorptionsverfahren reduziert werden muss.

Ferner wurden auch Enzyme zum Aufschluss von pflanzlichem Material zur Verbesserung der Ausbeute an Öl aus Ölsaaten eingesetzt (vgl. z.B. WO 1991/013956 A1 oder EP 0 113 165 A1). Alle derartigen Verfahren basieren auf den Schritten a) Zerkleinern der Ölsaat durch Mahlen oder Pressen, b) Zugabe von Wasser und Enzym wodurch der Feuchtigkeitsgehalt auf 20%-35% oder höher ansteigt, c) Inkubation über 6-24 h bei erhöhter Temperatur, d) Abpressen oder Abzentrifugieren des Öls oder Trocknen auf unter 10% Restfeuchtigkeit und Extraktion des Öls bzw. eine Kombination aus Pressen und Extrahieren (vgl. z.B. Dominguez et al., 1995, Food Chem. 54: 223-231; Dominguez et al., 1994, Food Chem. 49, 271-286). Insbesondere ist hier auf die Arbeiten von Dominguez et al., 1995, hinzuweisen, die an Soja durchgeführt wurden. Darin wird auf die Wichtigkeit des höheren Wassergehaltes in der Stufe der Enzymreaktion sowie auf den reduzierten Wassergehalt für die anschließende Extraktion verwiesen.

Die Druckschrift "J Am Oil Chem Soc 1993, 70 (9), 825-829" beschreibt übersichtsartig die Verwendung einer Enzymbehandlung vor dem Auspressen von Ölsaaten sowie den Einfluss dieser Enzymbehandlung auf die Qualität des so erhaltenen Öls sowie die Energiebilanz des Verfahrens. Die Enzymbehandlung erfolgt dabei bei einem Feuchtigkeitsgehalt von 30% und 50°C für sechs Stunden. Das so behandelte Saatgut wird vor dem Auspressen auf einen Feuchtigkeitsgehalt von 6% getrocknet.

Nur unter Verwendung eines hohen Wassergehaltes während der Enzymreaktion haben sich als Enzyme, je nach Ölsaat Cellulasen, Hemicellulasen, Proteasen oder Enzymmischungen aus Cellulasen, Pektinasen und Proteasen als wirkungsvoll erwiesen. Das Ziel der enzymatischen Behandlung ist die Schwächung und der partielle Abbau der Zellwände (primäre und sekundäre Zellwand) sowie die Zerstörung der Membranhülle, die das Öl umgibt. Für ersteres ist der Einsatz von Cellulasen, Hemicellulasen und Pektinasen möglich, für letzteres der Einsatz von Proteasen zur Hydrolyse der Oleosine. Das Ziel der enzymatischen Behandlung ist die Schwächung der Zellwände und Membranen, die das Öl einschließen, um eine erleichterte Gewinnung zu ermöglichen.

Diese Verfahren sind sehr zeitaufwendig und energieintensiv, insbesondere um den für die Enzymreaktion erforderlichen hohen Wassergehalt vor den Press- oder Extraktionsschritten zu verringern. Auch der für die Inkubation zur Verfügung zu stellende Platz ist sehr groß, wenn man den durchschnittlichen Tagesdurchsatz einer Ölmühle von 200-1000 t gewonnenem Öl pro Tag zu Grunde legt.

Es besteht somit ein Bedarf nach verbesserten Verfahren zur Gewinnung von Öl aus Pflanzensamen, bei denen die vorstehenden Nachteile des Stands der Technik nicht auftreten.

Der vorliegenden Erfindung liegt somit die Aufgabe zugrunde, ein verbessertes Verfahren zur Gewinnung von Öl aus Pflanzensamen bereitzustellen. Das Verfahren soll nicht die Nachteile des vorstehenden Stands der Technik aufweisen. Insbesondere soll erfindungsgemäß ein Verfahren bereitgestellt werden, das zu hohen Ausbeuten an Öl sowie zu einem geringen Phosphatid- und Feuchtigkeitsgehalt in dem Öl führt. Das Verfahren soll sich ferner energie- und zeitsparend einsetzen lassen und soll zu hohen Ausbeuten an Öl führen. Ferner soll das Verfahren universell einsetzbar sein, d.h. sich beispielsweise sowohl zur Gewinnung für Öl z.B. zur Erzeugung von Biodiesel als auch zur Gewinnung von Speiseöl eignen. Ferner soll das Verfahren einfach und kostengünstig handhabbar sein und sich für eine breite Vielzahl von Ölsaaten eignen.

Überraschenderweise wurde nun gefunden, dass durch Besprühen der trockenen Ölsaaten mit Enzymen ein Verfahren zur Gewinnung von Öl aus Pflanzensamen erhalten werden kann, das mit erhöhten Ausbeuten an Öl, einer verringerten Pressdauer und einem verringerten Phosphatidgehalt im Öl, verglichen mit Ölen aus konventionellen Pressungen, einhergeht. Ferner wird durch das erfindungsgemäße Verfahren der Feuchtigkeitsgehalt der Ölsaat in keinem Schritt der Verarbeitung signifikant erhöht.

Die Erfindung betrifft somit ein Verfahren zur Gewinnung von Öl aus Pflanzensamen, das dadurch gekennzeichnet ist, dass man a) eine wässrige, ein oder mehrere cellulolytische und/oder lipolytische und/oder pektinolytische und/oder proteolytische Enzym(e) und/oder Phytase enthaltende Lösung direkt auf das trockene Saatgut aufsprüht, b) das so erhaltene Saatgut ohne weitere Inkubationsperiode und ohne weitere Wasserzugabe direkt in an sich bekannter Weise einer ein- oder mehrstufigen Pressung gegebenenfalls in Kopplung mit einer Extraktion zuführt, und c) das Öl in an sich bekannter Weise gewinnt und gegebenenfalls weiterverarbeitet, wobei das durch das Aufsprühen der Enzymlösung aufgebrachte Wasser den natürlichen Wassergehalt der Saaten (4-8% (w/w)) um 0,1 bis 2% (w/w) bezogen auf die Masse des Saatguts erhöht.

Die Erfindung betrifft ferner die Verwendung dieses Verfahrens bei der Herstellung von Speiseöl und bei der Gewinnung von Öl z.B. für die Herstellung von Biodiesel.

Bei dem erfindungsgemäßen Verfahren wird die Enzymlösung direkt auf das Saatgut oder bei größeren Ölsaaten auf das zerquetschte oder gemahlene Saatgut aufgetragen, ohne dass der natürliche Wassergehalt der Ölsaat dadurch signifikant zunimmt. Überraschenderweise wurde gefunden, dass die Enzymlösung direkt auf das trockene Saatgut aufgesprüht werden kann, ohne dass eine Inkubation des mit Enzym besprühten Saatguts in Wasser erfolgen muss. Das Saatgut kann als solches oder nach Zerkleinerung mit einer Enzymlösung besprüht werden. Dabei wird eine wässrige Lösung, die das gewählte Enzym bzw. die gewählten Enzyme enthält, in an sich bekannter Weise auf das Saatgut aufgesprüht. Bei der wässrigen Enzymlösung kann es sich um eine auf bekannte Art und Weise aus dem Kulturüberstand von Mikroorganismen gewonnene Enzymlösung handeln (z.B. bestehend aus den Schritten: Abtrennen der Biomasse von der Kulturflüssigkeit, Aufkonzentrieren der gewonnenen Lösung durch Ultrafiltration und Entkeimungsfiltration), die auch Stabilisierungsmittel enthalten kann. Es können aber auch pflanzliche Enzyme, wie z.B. Papain, in der Enzymlösung enthalten sein. Die typische Menge an aufgetragener Enzymlösung liegt in der Größenordnung von 1.000 ppm bezogen auf das Gewicht der Ölsaat. Das durch das Aufsprühen der Enzymlösung aufgebrachte Wasser erhöht den natürlichen Wassergehalt der Saaten (4-8% w/w) nur um ca. 0,1 bis max. 2% (w/w) bezogen auf die Masse des Saatguts. Das so vorbereitete Saatgut kann dann ohne weitere Inkubationsperiode und ohne weitere Wasserzugabe direkt der Pressung zugeführt werden und das Öl dabei gewonnen werden. Im Gegensatz zu den im Stand der Technik bekannten Verfahren, die hohe Wassergehalte nutzen, um z.B. Produktinhibition der Enzyme zu verhindern oder die Diffusion der Enzyme an die Substrate zu verbessern, ist es bei dem erfindungsgemäßen Verfahren ausreichend, den natürlichen Wassergehalt der Ölsaat zu benutzen. Die Enzyme führen zu einer Veränderung der Zellwände, wodurch das Ausfließen des Öls bei der Pressung verbessert wird. Hierzu ist kein vollständiger Abbau der Zellwände durch die Cellulasen, Hemicellulasen oder Pektinasen nötig. Proteasen helfen die proteinhaltige Membran, die den Ölkörper umgibt, zu zerstören. Phytase hilft, insbesondere bei Phytinsäure reichen Saaten wie Soja, die Wechselwirkung der Proteine über Phytinsäurebrücken zu vermindern und damit den Ölfluss bei der Pressung zu verbessern. Durch den geringen Wassergehalt wird auch das Pressverfahren begünstigt in dem er dazu beiträgt, dass der Presskuchen in der Presse weiterbefördert wird und es sich nicht aufgrund großer Wassermengen kein Pressdruck auf das Saatgut und den Presskuchen aufbauen kann.

Da bei der Pressung, je nach Pressdruck, die Temperatur stark ansteigen kann, zum Teil bis über 100°C im Presskuchen, sollten für das Verfahren bevorzugt thermostabile Enzyme zum Einsatz kommen. Der Einsatz mesophiler und/oder thermotoleranter Enzyme ist jedoch auch möglich. Erfindungsgemäß werden ein oder mehrere Enzyme verwendet, die in der Lage sind, die Zellwände bzw. Zellmembranen von pflanzlichen Zellen aufzulösen bzw. zumindest partiell zu perforieren, bzw. die Membran der Oleosine zu lockern. Insbesondere werden cellulolytische, hemicellulolytische, lipolytische, pektinolytische und/oder proteolytische Enzyme eingesetzt. Diese Enzyme können einzeln oder auch in Kombination eingesetzt werden, je nach dem Aufbau des Saatgutes, z.B. ist der Zusatz von Proteasen zu proteinreichem Saatgut wie Sojabohnen sinnvoll. Der Zusatz von hemicellulolytischen und pektinolytischen Enzymen ist sinnvoller bei Saatgut, das vermehrt diese Speicherstoffe in den Zellwänden enthält und somit ein Einsatz von Cellulasen alleine keine ausreichende Wirkung in der Lockerung oder Perforierung der Zellwand hervorrufen würde. Der Einsatz von Pektinasen, die das Protopektin der Mittellamellen angreifen, kann zu einer verbesserten Pastenbildung für die Pressung und damit zu einer erleichterten Ölfreisetzung führen. Der Einsatz von Galactomannanasen kann z.B. bei Sojabohnen von Vorteil sein. Häufig sind diese Enzymaktivitäten in handelsüblichen Pektinaseprodukten in verschieden hohen Anteilen enthalten. Insbesondere ist das Enzym ausgewählt aus natürlichen oder rekombinant hergestellten Cellulasen, Endoglucanasen, Cellobiohydrolasen, Hemicellulasen, Peptidasen, Phospholipasen, Pektinasen oder Phytasen. Ferner können auch aus den vorstehenden Enzymen abgeleitete Varianten verwendet werden, beispielsweise auf der Grundlage der vorstehenden Enzyme hergestellte rekombinante Enzyme, die Teile der vorstehenden Enzyme enthalten und durch Anfügen bzw. Entfernen von Substratbindungsdomänen in ihrer Aktivität modifiziert sind. Entsprechende Enzyme sind im Handel erhältlich bzw. können von einem Fachmann hergestellt werden. Die Enzyme können einzeln oder in Kombination verwendet werden.

Die Art und die Menge des eingesetzten Enzyms hängt dabei von der Art und der Menge des zu behandelnden Saatguts ab. Bezogen auf die vorliegenden Enzymprodukte betragen die Dosagen in der Regel zwischen 100 und 20.000 ppm (w/w), bevorzugter zwischen 200 und 15.000 ppm (w/w), noch bevorzugter zwischen 500 und 10.000 ppm (w/w). Bei mesophilen Enzymen kann die Dosage höher liegen, um dem Verlust durch die thermische Inaktivierung, bzw. die geringe Restaktivität bei den höheren Temperaturen während der Pressung Rechnung zu tragen.

Die Pressung kann einstufig oder mehrstufig gestaltet sein. Bei einer mehrstufigen Pressung ist der Zusatz der Enzyme auch zwischen den einzelnen Pressstufen möglich. Der Pressung kann sich auch ein Extraktionsschritt anschließen, ohne dass das Pressgut (Schrot) in seinem Wassergehalt reduziert werden muss. Verfahren zur Durchführung einer Ölpressung sind einem Fachmann gut bekannt. Nach der Pressung wird das Öl in an sich bekannter Weise weiterverarbeitet.

Das erfindungsgemäße Verfahren zeichnet sich durch einen erhöhten Durchsatz an Saatgut pro Zeiteinheit, wie auch durch eine verbesserte Pressleistung und Pressausbeute sowie einen geringeren Phospholipid- bzw. Phosphatidgehalt im Öl aus. Durch die erhöhte Ausbeute und die erhöhte Pressgeschwindigkeit sinkt auch der Energiebedarf pro t gewonnenem Öl. Da der Wassergehalt durch das Aufbringen der Enzymlösung auf das trockene Saatgut nur geringfügig zunimmt, kommt das Verfahren bei Einsatz von Extraktionsmitteln auch ohne eine vorhergehende Trocknung aus und weist damit einen deutlich geringeren Energiebedarf im Gegensatz zu bisher entwickelten enzymatischen Verfahren auf, die alle Schritte zur Reduktion des Wassergehaltes von >25% bis unter 10% enthielten, um die Ausbeute bei der Extraktion nicht zu verringern.

Ferner besitzt das erfindungsgemäße Verfahren den Vorteil, dass das gewonnene Öl gegenüber herkömmlichen Verfahren deutlich im Phosphatidgehalt reduziert ist und sich damit, z.B. bei mehrstufigen Pressverfahren, die Entschleimung - also die Reduktion des Phosphatidgehaltes - auf kleine Anteile des gewonnenen Öls beschränken lässt.

Das erfindungsgemäße Verfahren eignet sich sehr gut bei der Gewinnung von Öl für die Herstellung von Speiseöl oder Biodiesel.

Die beigefügte Figur erläutert die Erfindung näher:
Figur 1 zeigt die Verkürzung der Presszeit durch den Einsatz von *Melanocarpus* Cellulase mit einer *Trichoderma reesei* CBH1 Cellulase-Bindungsdomäne (Darstellung von 3-fach-Bestimmungen).

Generell kann das erfindungsgemäße Verfahren mit beliebigen der vorstehend genannten Enzyme durchgeführt werden.

Als bevorzugte Enzyme haben sich Cellulasen, insbesondere Endoglucanasen, aus *Acremonium thermophilum,* die der Hydrolasefamilie 45 angehören (Einteilung siehe http://afmb.cnrs-mrs.fr/CAZY/GH_intro.html), Cellulasen, insbesondere Endoglucanasen, aus *Melanocarpus albomyces* (Hydrolasefamilie 45), die mit einer Cellulase-Bindungsdomäne (CBD) von CBH1 aus *Trichoderma reesei* verbunden wurden, oder Cellulasen, insbesondere Cellobiohydrolasen, aus *Thermoascus aurantiacus* (Hydrolasefamilie 7), die mit einer Cellulase-Bindungsdomäne (CBD) von CBH1 aus *Trichoderma reesei* verbunden wurden, die Endoglucanase II aus *Trichoderma reesei* und die Beta-Glucosidase aus *Chaetomium thermophilum* herausgestellt. Bevorzugte Hemicellulasen sind die *Trichoderma reesei* Xylanase II, die Xylanasen *xlnA* aus *Actinomadura flexuosa* und die *Chaetomium thermophilum* Xylanase *xylA.* Bevorzugte Pektinasen sind die Pektinasen aus *Aspergillus niger* und *Trichoderma reesei.* Bevorzugte Phospholipasen sind Phospholipasen vom Typ C und/oder Phospholipasen Typ A oder B, wie z.B. die Phospholipasen aus *Aspergillus fumigatus, Aspergillus foetidus* oder *Thermomyces lanuginosus.* Bevorzugte Phytasen sind die Phytase aus *Aspergillus niger, E. coli, Peniophora lysii* oder daraus abgeleitete Varianten wie Nov9X oder die *Aspergillus* Consensus Phytase.

Die nachstehenden Beispiele erläutern die Erfindung näher.

### Referenzbeispiel 1: Bestimmung der Aktivität der neutralen Cellulase

Die Endo-1,4-β-glucanase-Aktivität wird durch Hydrolyse des Substrates Carboxymethyl-Cellulose bei pH 7, 50°C und einer Inkubationszeit von 10 min bestimmt. Gemessen wird die freigesetzte Menge an reduzierenden Zuckern, bezogen auf Glucose, nach Reaktion mit Dinitrosalicylsäure durch photometrische Detektion des entstandenen Farbkomplexes bei 540 nm. Eine Einheit NCU ist definiert als das Äquivalent, dass der Freisetzung von einem Nanomol Glucose pro Sekunde entspricht.

1,8 ml Substratlösung (3% CMC [Sigma C-56778, low viscosity] in 10 mM HEPES Puffer pH 7,0 [Sigma H-3375] werden für 5 min bei 50°C temperiert und dann mit 200 µl verdünnter Enzymlösung versetzt und für 10 min inkubiert. Danach werden 3 ml DNS Reagenzlösung (10 g I⁻¹ Dinatriumsalicylsäure [Sigma D-0550], 16 g I⁻¹ NaOH, 300 g I⁻¹ K-Na-Tartrat [Merck 8087]) zugegeben und für 5 min im kochenden Wasserbad inkubiert. Die Messungen der Absorption werden gegen einen gleichbehandelten Reaktionsblindwert mit Wasser statt Enzymlösung durchgeführt.

### Referenzbeispiel 2: Bestimmung der Aktivität thermostabiler saurer Cellulasen

Die Methode ist an die Methode in Referenzbeispiel 1 angelehnt und nutzt eine Inkubationstemperatur von 60°C anstatt 50°C. Die zweite Abweichung betrifft den Puffer. Der HEPES Puffer wird durch einen 10 mM Citratpuffer, pH 4,8 ersetzt. Die Einheit der Enzymaktivität ist CMU g⁻¹.

### Referenzbeispiel 3: Bestimmung der Cellobiohydrolaseaktivität

Cellobiohydrolase (CBHI) und Endoglucanase (EGI) hydrolysieren das Substrat 4-Methylumbelliferyl-β-D-lactosid, und setzen dabei 4-Methylumbelliferon (7-Hydroxy-4-methylcumarin) frei. Diese Reaktion kann photometrisch verfolgt werden durch Messung der Absorption von 4-Methylumbelliferon unter alkalischen Bedingungen bei 370 nm. β-Glucosidase Aktivität in der Probe wird unterdrückt durch 100 mM Glucose in der Reaktionsmischung. Eine PCU Einheit ist definiert als die Menge Enzymaktivität, die ein nmol 4-Methylumbelliferon aus 4-Methylumbelliferyl-β-D-lactosid unter den Versuchsbedingungen (pH 5,0, 50°C, 10 min Inkubationszeit) pro Sekunde freisetzt (1 PCU=1 nkat).

Der Anteil anwesender Endoglucanase kann einzeln gemessen werden durch Zusatz von 5 mM Cellobiose im Reaktionsansatz, wodurch die Reaktion der Cellobiohydrolase mit 4-Methylumbelliferyl-β-D-lactosid unterbunden wird.

250 µl Substratlösung (1 mM 4-Methylumbelliferyl-β-D-lactosid [Sigma M-2405] in 50 mM Natriumacetatpuffer pH 5,0 und 50 µl 1M Glucoselösung in 50 mM Natriumacetatpuffer werden für 10 min bei 50°C temperiert. Nach Zugabe von 200 µl verdünnter Enzymlösung wird gemischt und für 10 min bei 50°C inkubiert. Dann wird 1 ml 1M Natriumcarbonatlösung zum Abstoppen der Enzymreaktion zugegeben und die Absorption gegen einen gleichbehandelten Blindwert mit Wasser anstatt Enzymlösung bei 370 nm gemessen.

Zur Kalibrierung wird 7-Hydroxy-4-methylcumarin [Aldrich 12,872-4] gelöst in 1 M Natriumcarbonat verwendet.

### Referenzbeispiel 4: Bestimmung der β-Glucosidaseaktivität

β-Glucosidase hydrolysiert das Substrat 4-Nitrophenyl-β-D-Glucopyranosid zu 4-Nitrophenol und Glucose. Die Reaktion wird durch Zugabe von Alkali gestoppt und das sich dabei gelb färbende 4-Nitrophenol wird photometrisch detektiert.

Eine Einheit BGU ist definiert als das Äquivalent, das der Freisetzung von einem Nanomol 4-Nitrophenol pro Sekunde entspricht.

1,8 ml Substratlösung (1 mM 4-Nitrophenyl-β-D-Glucopyranosid [Merck 6793] in 50 mM Citratpuffer [Merck 6448], pH 4,8) werden bei 50°C für 5 min temperiert. Danach werden 200 µl verdünnte Enzymlösung zugegeben und für 10 min bei 50°C inkubiert. Nach 10 min wird 1 ml 1 M Na₂CO₃ Lösung zugegeben und die Absorption bei 400 nm gegen einen gleichbehandelten Reaktionsblindwert mit Wasser anstatt Enzymlösung gemessen.

Die Kalibrierkurve wird mit 4-Nitrophenol [Sigma 104-8] aufgestellt.

### Referenzbeispiel 5: Bestimmung des Phosphatidgehalts im Öl

Der Phosphatidgehalt (oder auch Phospholipidgehalt genannt) wird ausgedrückt in ppm Phosphor im Öl. Er wird nach Veraschung bei 850°C unter Zugabe von Magnesiumoxid als Phosphomolybdatkomplex photometrisch bei 830 nm bestimmt. Zur Kalibrierung wird K₂HPO₄ benutzt.

Der Phosphatidgehalt kann auch flammenphotometrisch mit Hilfe eines AAS-Gerätes direkt im Öl bestimmt werden.

Der Phosphatidgehalt im mit nach dem Verfahren nach Referenzbeispiel 6 mit n-Hexan extrahierten Gesamtöl des Rapssamens der Beispiele 1 bis 3 betrug ca. 93 ppm P.

### Referenzbeispiel 6: Bestimmung des Ölgehalts mittels Soxhletverfahrens

15 g gemahlene Rapssamen oder 20-25 g zerkleinertes Extraktionsschrot werden in eine Extraktionshülse [Sartorius Best Nr. FT-1210-033080] gegeben und in einer Soxhlet Apparatur über 4 h mit n-Hexan reinst (Merck) extrahiert. Die Menge an gewonnenem Öl wird nach Verdunsten des Lösungsmittels im Vakuum ausgewogen.

Der Rapssamen der Beispiele 1 bis 3 enthält 41% Öl.

### Referenzbeispiel 7: Bestimmung der Farbe von Öl

Das durch Pressung oder durch Extraktion aus einer Ölsaat gewonnene Öl wird bei 12.000 x g für 5 min zur Abtrennung von Schwebeteilchen zentrifugiert und dann die Farbe in einer 1 cm Küvette bei 508 nm gegen Wasser im Photometer bestimmt.

Das mit Hexan extrahierte Gesamtöl nach Referenzbeispiel 6 des mit einer Schlagmühle zerkleinerten Rapssamens der Beispiele 1 bis 3 hatte eine Absorption von 1,2 AU und damit eine sehr starke Eigenfarbe.

### Beispiel 1: Einsatz von Enzymen zur Erhöhung der Pressgeschwindigkeit

### Versuch 1:

Für den folgenden Versuch wurde eine rekombinant mit *Trichoderma reesei* hergestellte *Acremonium thermophilum*-Endoglucanase mit einem Molekulargewicht von ca. 28,6 kDa und einem Temperaturoptimum von ca. 75°-80°C verwendet, wie z.B. in FI 20051318 beschrieben. Auf dunklen Rapssamen der Firma DKSH, Niederlande, Ernte 2005, mit einem Wassergehalt von 6,5% (w/w) wurde die Enzymlösung (Endoglucanase), ein steril filtriertes Ultrafiltrationskonzentrat mit einer Trockenmasse von ca. 15%, mittels einer Kolbenhubspritze fein vernebelt aufgesprüht (0,1 % w/w) und der Rapssamen anschließend für 30 s gut durchgemischt. Die Dosage der Endoglucanase lag bei 64.400 CMC je kg Rapssamen. Der so vorbereitete Raps wurde einer einstufigen Pressung in einer Ölpresse, z.B. vom Typ Ölprinz, der Firma Kernkraft (www.oelpresse.de), Deutschland, unterzogen. Die Presse lief dabei mit einer Drehzahl von 25 upm und war mit einem Presskopf mit 12 mm Öffnung bestückt und auf ein Spaltmaß von 1,5 mm eingestellt. Die Aufenthaltszeit des Rapses im Presskopf betrug ca. 1-2 min. Im Presskopf steckte ein Thermosensor mit einem angeschlossenen Messgerät der Firma Roth zur Bestimmung der Presskopftemperatur. Das Öl wurde in einer auf einer Waage stehenden Glasschale aufgefangen und die Menge und die Pressgeschwindigkeit sowie die Temperatur des Öls bestimmt. Der Presskuchen gelangte in eine weitere auf einer separaten Waage stehende Schale und wurde anschließend in einer Kaffeemühle mit Schlagwerk für die Bestimmung des Restölgehaltes durch Extraktion nach Referenzbeispiel 6 zerkleinert.

Die Auswirkung von *Acremonium*-Endoglucanase auf die Pressgeschwindigkeit ist in Figur 1 dargestellt. Es wurden drei Wiederholungen des Versuchs mit und ohne Enzymzusatz durchgeführt. Es wurde immer die gleiche Menge an Rapssamen eingesetzt, so dass die erzielte ausgepresste Ölmenge jeweils ca. 600 g betrug. Wie Figur 1 zeigt, ist eine sehr hohe Wiederholbarkeit über die verwendete Presszeit von ca. 22 min gegeben. Zwischen den einzelnen Wiederholungsmessungen ergeben sich keine signifikanten Abweichungen. Die Erhöhung des Durchsatzes an Raps durch die Ölmühle und damit eine Verkürzung der Presszeit zur Erzielung einer konstanten Ausbeute an Öl wurde in allen drei Durchgängen erreicht. Die Verbesserung der Pressleistung der Ölmühle führte zu einer Steigerung des erhaltenen Öls pro Stunde um 6,6%.

Die Phosphatidgehalte im ausgepressten Öl waren mit 6,5-8 ppm P sehr gering und ermöglichen eine direkte Weiterverarbeitung des Öls in der Speiseindustrie und auch für die Herstellung von Biodiesel. Die Werte des Phosphatidgehaltes lagen 5% - 10% unter denen der Pressungen ohne Enzymzusatz. Dies ist bei den absolut geringen Phosphatidgehalten zu erwarten gewesen.

Die Presskopftemperatur ohne Enzymzusatz lag im Mittelwert über alle drei Messungen bei 77,0°C, wohingegen bei Einsatz der Endoglucanase, trotz erhöhtem Rapsdurchsatz pro Zeiteinheit und damit einer potentiell höheren Reibung im Presskopf, die Temperatur im Mittelwert über alle drei Messungen nur auf Werte von 75,4°C anstieg. Dies zeigt deutlich, dass mit Enzymzusatz eine effizientere und für das Öl schonendere Pressung vorlag.

Die Farbe des gepressten Öls verbesserte sich mit Enzymzusatz von einer Absorption im Mittel von 0,801 AU auf 0,776 AU. Diese Werte sind deutlich besser als die Farbe des nur mit Hexan extrahierten Öls aus dem Rapssamen von 1,2 AU und ermöglichen so den Einsatz von Bleichmittel/Bleicherde bei der Weiterverarbeitung zu Speiseöl zu vermindern und Kosten zu sparen.

### Versuch 2:

In diesem Versuch wurde bei gleichem Versuchsaufbau eine Cellobiohydrolase aus *Thermoascus aurantiacus,* die die *Trichoderma reesei* CBH1 Cellulosebindungsdomäne am C-terminalen Ende trägt, (z.B. hergestellt gemäß WO 2006/117432 A1) in einer Dosage von 180 PCU je kg Rapssamen eingesetzt. Die Cellobiohydrolase hat ein Molekulargewicht von ca. 46,2 kDa und der angehängte CBH1 Linker und die CBH1 Bindungsdomäne von ca. 6,8 kDa. Das Enzym zeigt ein Temperaturoptimum von ca. 65°C. Wie auch bei der Cellulase aus Versuch 1, konnte hiermit eine Erhöhung des Durchsatzes und damit eine um 10,8% höhere Ölmenge je Zeiteinheit erzielt werden.

### Versuch 3:

Mesophilere Enzyme als die in den Versuchen 1 und 2, bzw. Beispiel 2 verwendeten, wie die Endoglucanase I aus *Trichoderma reesei* mit einem Temperaturoptimum von ca. 50°C (z.B. beschrieben in EP 0 137 280 A1), konnten in höheren Dosagen ebenfalls zu einer Verkürzung der relativen Presszeit und damit zu einer Durchsatzerhöhung beitragen. In einer Dosage von 376.000 BU je kg Rapssamen konnte eine Erhöhung des Durchsatzes um 2,1% und bei einer Dosage von 752.000 BU je kg Rapssamen eine Erhöhung des Durchsatzes um 6,3% erzielt werden.

### Beispiel 2: Einsatz von Enzymmischungen zur Erhöhung der Pressgeschwindigkeit und Verbesserung der Ausbeute an gepresstem Öl

Für die Versuche wurde ein anderes Enzym als in Beispiel 1 verwendet, nämlich eine rekombinant mit *Trichoderma reesei* hergestellte neutrale Cellulase aus *Melanocarpus albomyces*, die eine *Trichoderma reesei* CBH1 Cellulosebindungsdomäne enthält, wie es in der WO 2006/117432 A1 beschrieben ist, sowie die rekombinant mit *Trichoderma reesei* hergestellte Endoglucanase aus *Acremonium* aus Beispiel 1, Versuch 1. Die *Melanocarpus* Cellulase hat ein Molekulargewicht von ca. 20,2 kDa und der angehängte Linker mit der CBD der Cellobiohydrolase 1 aus *Trichoderma reesei* hat ein Molekulargewicht von ca. 6,8 kDa. Das Enzym hat ein Temperaturoptimum von ca. 75°C. Die Dosagen lagen bei 64.400 CMC je kg Rapssamen für die Endoglucanase aus *Acremonium* und 130.000 NCU je kg Rapssamen für die neutrale Cellulase aus *Melanocarpus.* Die aufgesprühten Mengen der Enzymlösungen betrugen jeweils 0,1% (w/w) bezogen auf die Masse des Rapssamens. Die Enzymlösungen waren steril filtrierte Ultrafiltrate mit einer Trockenmasse von ca. 15% (w/w). Der experimentelle Aufbau war wie in Beispiel 1 mit Ausnahme, dass die Düsenöffnung statt 12 mm nur 10 mm betrug. Damit lassen sich bessere Pressergebnisse erzielen. Es wurde auch der gleiche Raps (gleiche Charge) wie in Beispiel 1 verwendet, so dass die Ergebnisse direkt vergleichbar sind. Die Ergebnisse sind in Tabelle 1 angegeben.

**Tabelle 1: Einsatz einer Cellulase bzw. einer Endoglucanase zur Verbesserung der Ausbeute an Öl bei der Pressung von Raps und Verringerung der Presszeit zum Erzielen der gleichen Ölmenge. Bei dem Ansatz Wasser wurde die gleiche Menge Wasser (0,1% (w/w) bezogen auf die Masse Rapssamen) wie sie bei den Enzymlösungen aufgetragen wird, eingesetzt.**

| Enzym | Presskopf Temperatur [°C] | Relative Presszeit * [%] | Ölausbeute [%]** | Restölgehalt im Presskuchen [%] | Phosphatidgehalt im gepressten Öl [ppm P] |
|---|---|---|---|---|---|
| Keines | 83,0 | 100,0 | 34,7 | 16,6 | 11 |
| Nur Wasser | 86,5 | 100,2 | 34,5 | 16,4 | 14 |
| Endoglucanase | 82,5 | 86,9 | 35,3 | 16,1 | 9 |
| neutrale Cellulase | 81,8 | 85,4 | 35,1 | 16,1 | 8 |

| | | | | | |
|---|---|---|---|---|---|
| * Die relative Presszeit ist die Zeit, die benötigt wird um die gleiche Masse an Öl zu erhalten. **Die Ölausbeute gibt die absolut erhaltene Ausbeute an Öl aus dem Rapssamen an, unabhängig von der Laufzeit des Pressvorganges. | | | | | |

Wie die Ergebnisse zeigen, kann bei korrekt gewählten Pressparametern, insbesondere der Wahl der Düsenöffnung der Presse, mit Hilfe entsprechender Enzyme die Ausbeute an Öl bei der Pressung erhöht werden. Der Vorteil dieses Öls ist der niedrige Phosphatidgehalt, der eine direkte Weiterverarbeitung ohne Entschleimung ermöglicht. Dies gilt auch, trotz der um ca. 10°C höher liegenden Presskopftemperatur im Vergleich zu den Bedingungen in Versuch Beispiel 1. Diese Temperaturerhöhung ist durch die Verengung der Spaltöffnung der Presse und dem hierdurch hervorgerufenen höheren Pressdruck bedingt.

Im Blindwert und dem zu Vergleichszwecken durchgeführten Versuch mit Wasser ohne Enzym stieg der Phosphatidgehalt im gepressten Öl gegenüber den Bedingungen mit größerer Düse (Beispiel 4) erwartungsgemäß von 8 auf bis zu 14 ppm P an und liegt damit über dem für Speiseöl geltenden Grenzwert und an der Grenze für das für die Biodieselherstellung zulässigen Gehaltes. Jedoch lagen die Phosphatidgehalte im mit Enzymzusatz gepressten Öl wie auch in Beispiel 4 auf niedrigerem Niveau von nur 8-9 ppm P. Der Enzymzusatz hat sich also auch positiv auf die Erniedrigung der Phosphatidgehalte im gepressten Öl im Vergleich zu Öl, das ohne Enzymzusatz erhalten wurde, ausgewirkt. Dies ermöglicht die Weiterverarbeitung des so gewonnenen Öls direkt ohne Entschleimung zu Speiseöl, wie auch zu Biodiesel.

Weiterhin konnte die Zeit, die benötigt wird um die gleiche Menge an gepresstem Öl zu erhalten (relative Presszeit), nochmals deutlich verkürzt werden und somit der Durchsatz der Ölmühlen gesteigert werden. Die relativen Laufzeiten bzw. Presszeiten waren nicht nur um 6% kürzer, sondern verkürzten sich sogar um bis zu 14,6%.

Ähnliche Ergebnisse ließen sich auch mit einer rekombinant mit *T. reesei* hergestellten beta-Glucanase aus *Chaetomium thermophilum* mit einem Molekulargewicht on ca. 76,4 kDa und einem Temperaturoptimum von 65°C, hergestellt zum Beispiel wie in FI20051318 beschrieben, erreichen. Die Dosage lag hierbei bei 17.840 BGU je kg Rapssamen. Sowohl die Raumzeitausbeute (Erhaltenes Öl je Gerät, kg Rapssamen und Zeiteinheit) stieg um 3% wie auch die absolute Ölausbeute durch Pressung insgesamt um 2%.

### Beispiel 3: Auswirkung des Enzymeinsatzes auf den Phosphatidgehalt im Restölextrakt

In den Versuchen der Beispiele 1 und 2 wurde der gesammelte Presskuchen homogenisiert und zerkleinert. Aus aliquoten Anteilen des zerkleinerten Presskuchens wurde das noch im Presskuchen enthaltene Öl, auch Restöl genannt, nach Referenzbeispiel 6 extrahiert und darin der Phosphatidgehalt nach Referenzbeispiel 5 bestimmt. Die Ergebnisse sind in der folgenden Tabelle zusammengefasst.

**Tabelle 2: Bestimmung des Phosphatidgehalts des aus dem Presskuchen extrahierten Restöls.**

| Enzym | Anteil Pressöl*** am Gesamtöl**** [%] | Phosphatidgehalt im Pressöl [ppm P] | Phosphatidgehalt im Extraktionsöl [ppm P] |
|---|---|---|---|
| Nur Extraktion * | n.a. | n.a. | 85 - 99 |
| Keines ** | 83,7 | 9 | 73,6 |
| Endoglucanase | 83,6 | 8 | 70,5 |

| | | | |
|---|---|---|---|
| • * Bei diesem Ansatz wurde der Rapssamen nur zerkleinert und dann direkt mit n-Hexan extrahiert ohne eine vorgeschaltete Pressung. • ** In diesem Ansatz wurde kein Enzym zugesetzt und der Rapssamen direkt gepresst. • *** Pressöl: durch Pressung erhaltenes Öl • **** Gesamtöl: durch Extraktion des zerkleinerten Rapssamen erhaltene Ölmenge. • n.a. nicht anwendbar | | | |

Wie die vorstehenden Ergebnisse zeigen, wird durch den Einsatz von Enzymen die Freisetzung der restlichen Phosphatide bei Extraktion des noch im Presskuchen verbliebenen Restöls (Gesamtöl minus Pressöl; ca. 16-17% des Gesamtöls) stark verhindert. Wenn das gesamte Öl extrahiert wird, so werden ca. 3,5 bis 4,0 mg P an Phospholipiden mitextrahiert (Gesamtmenge Öl * Phosphatidgehalt des durch Extraktion erhaltenen Öls). Das Pressöl enthält nur 0,274 bis 0,309 mg P (Pressöl * Phosphatidgehalt im Pressöl) und das anschließend extrahierte Restöl nochmals 0,474 bis 0,492 mg P (Restöl * Phosphatidgehalt im Restöl). Dadurch verbleiben durch den Enzymeinsatz im Presskuchen auch nach auf die Pressung folgender Extraktion 2,7 bis 3,3 mg P an Phospholipiden, was mehr als ¾ bis ⁴/₅ der gesamt durch reine Extraktion zu erhaltender Phospholipide im Raps entspricht. Der Enzymeinsatz führt also auch hier zu einer Verbesserung des extrahierten Restöls durch Verminderung des Phospholipidgehaltes im Vergleich zur reinen Extraktion und damit zu einer Verringerung des anschließend durchzuführenden Entschleimungsaufwands.

## Patentansprüche

1. Verfahren zur Gewinnung von Öl aus Pflanzensamen, **dadurch gekennzeichnet, dass** man
a) eine wässrige, ein oder mehrere cellulolytische und/oder lipolytische und/oder pektinolytische und/oder proteolytische Enzym(e) und/oder Phytase enthaltende Lösung direkt auf das trockene Saatgut aufsprüht,
b) das so erhaltene Saatgut ohne weitere Inkubationsperiode und ohne weitere Wasserzugabe direkt in an sich bekannter Weise einer ein- oder mehrstufigen Pressung, gegebenenfalls in Kopplung mit einer Extraktion, zuführt, und
c) das Öl in an sich bekannter Weise gewinnt und gegebenenfalls weiterverarbeitet,
wobei das durch das Aufsprühen der Enzymlösung aufgebrachte Wasser den natürlichen Wassergehalt der Saaten (4-8% (w/w)) um 0,1 bis 2% (w/w) bezogen auf die Masse des Saatguts erhöht.

2. Verfahren nach Anspruch 1, **dadurch gekennzeichnet, dass** das Enzym aus natürlichen oder rekombinanten Cellulasen, Endoglucanasen, Cellobiohydrolasen, Hemicellulasen, Pektinasen, Phospholipasen, Proteasen oder Phytasen ausgewählt ist.

3. Verfahren nach Anspruch 2, **dadurch gekennzeichnet, dass** das Enzym aus *Acremonium thermophilium*-Endoglucanasen, *Melanocarpus albomyces*-Endoglucanasen, gegebenenfalls verbunden mit einer Cellulase-Bindungsdomäne von CBH1 aus *Trichoderma reesei,* Cellobiohydrolasen aus *Thermoascus aurantiacus,* gegebenenfalls verbunden mit einer Cellulase-Bindungsdomäne aus CBH1 aus *Trichoderma reesei,* Endoglucanase II aus *Trichoderma reesei* und Beta-Glucosidase aus *Chaetomium thermophilum, Trichoderma* reesei-Xylanase II, Xylanase xlnA aus *Actinomadura flexuosa,* Xylanase xylA aus *Chaetomium thermophilum,* Pektinasen aus *Aspergillus niger* und *Trichoderma reesei,* Typ A-, B- oder C-Phospholipasen aus *Aspergillus fumigatus, Aspergillus foetidus* oder *Thermomyces lanuginosus* ausgewählt ist.

4. Verfahren nach einem der Ansprüche 1 bis 3, **dadurch gekennzeichnet, dass** das Saatgut vor dem Aufsprühen des Enzyms geschält und/oder zerkleinert wird.

5. Verfahren nach einem der Ansprüche 1 bis 4, **dadurch gekennzeichnet, dass** das Enzym zusätzlich zwischen den einzelnen Pressungen auf das bereits gepresste Saatgut aufgesprüht wird.

6. Verfahren nach einem der Ansprüche 1 bis 5, **dadurch gekennzeichnet, dass** nach der Pressung ein Extraktionsschritt durchgeführt wird.

7. Verfahren nach einem der Ansprüche 1 bis 6, **dadurch gekennzeichnet, dass** die Pflanzensamen aus ölhaltigen Saaten ausgewählt sind.

8. Verfahren nach Anspruch 7, **dadurch gekennzeichnet, dass** die ölhaltigen Saaten aus Sojabohnen, Erdnuss, Baumwollsamen, Sonnenblumensamen, Maiskeimen und Rapssamen ausgewählt sind.

9. Verwendung eines Verfahrens nach einem der Ansprüche 1 bis 8 bei der Herstellung von Speiseöl.

10. Verwendung eines Verfahrens nach einem der Ansprüche 1 bis 8 bei der Herstellung von Biodiesel.

## Claims

1. A method for recovering oil from plant seeds, **characterised in that**
a) an aqueous solution containing one or more cellulolytic and/or lipolytic and/or pectinolytic and/or proteolytic enzyme(s) and/or phytase is sprayed directly onto the dry seeds,
b) the seeds thus obtained are directly subjected to pressing in one or more steps, without a further incubation period and without further addition of water, optionally coupled with extraction, in a manner known *per se,* and
c) the oil is recovered and, optionally, processed further in a manner known *per se,*
wherein the water applied by spraying on the enzyme solution increases the natural water content of the seeds (4-8% (w/w)) by 0.1 to 2% (w/w) based on the mass of the seeds.

2. A method according to claim 1, **characterised in that** the enzyme is selected from natural or recombinant cellulases, endoglucanases, cellobiohydrolases, hemicellulases, pectinases, phospholipases, proteases or phytases.

3. A method according to claim 2, **characterised in that** the enzyme is selected from *Acremonium thermophilium* endoglucanases, *Melanocarpus albomyces* endoglucanases, optionally bound to a cellulase binding domain of CBH 1 of *Trichoderma reesei,* cellobiohydrolases of *Thermoascus aurantiacus,* optionally bound to a cellulase binding domain of CBH1 of *Trichoderma reesei,* endoglucanase II of *Trichoderma reesei* and *β*-glucosidase of *Chaetomium thermophilum, Trichoderma reesei* xylanase II, xylanase xlnA of *Actinomadura flexuosa,* xylanase xylA of *Chaetomium thermophilum,* pectinases of *Aspergillus niger* and *Trichoderma reesei,* type A, B or C phospholipases of *Aspergillus fumigatus, Aspergillus foetidus* or *Thermomyces lanuginosus.*

4. A method according to any of the claims 1 to 3, **characterised in that** the seeds are peeled and/or comminuted before spraying on the enzyme.

5. A method according to any of the claims 1 to 4, **characterised in that** the enzyme is additionally sprayed on the pressed seeds between the individual pressing steps.

6. A method according to any of the claims 1 to 5, **characterised in that** an extraction step is performed after pressing.

7. A method according to any of the claims 1 to 6, **characterised in that** the plant seeds are selected from oleaginous seeds.

8. A method according claim 7, **characterised in that** the oleaginous seeds are selected from soy beans, peanut, cotton seeds, sunflower seeds, maize germs and rape seeds.

9. The use of a method according to any of the claims 1 to 8 for preparing edible oil.

10. The use of a method according to any of the claims 1 to 8 for preparing biodiesel.

## Revendications

1. Procédé d'obtention d'huile de graines de plantes, **caractérisé en ce que**
a) l'on pulvérise une solution aqueuse contentant une ou plusieurs enzyme(s) cellulolytique(s) et/ou lipolytique(s) et/ou pectinolytique(s) et/ou protéolytique(s) et/ou une phytase directement sur les graines sèches,
b) l'on conduit les graines ainsi obtenues, sans autre période d'incubation et sans autre adjonction d'eau, directement de façon connue en soi à une pression simple ou multiple éventuellement couplée à une extraction, et
c) l'huile est obtenue de façon connue et est éventuellement transformée,
l'eau appliquée par pulvérisation de la solution enzymatique augmente la teneur en eau naturelle des graines (4-8% (w/w)) de 0,1 à 2% (w/w) par rapport à la masse des graines.

2. Procédé selon la revendication 1, **caractérisé en ce que** l'enzyme est choisie parmi les cellulases, les endoglucanases, les cellobiohydrolases, les hemicellulases, les pectinases, les phospholipases, les protéases ou les phytases naturelles ou recombinantes.

3. Procédé selon la revendication 2, **caractérisé en ce que** l'enzyme est choisie parmi les endoglucanases dérivées *d'Acremonium thermophilium*; les endoglucanases dérivées de *Melanocarpus albomyces,* éventuellement associées à un domaine de liaison de cellulase de CBH1 dérivé de *Trichoderma reesei;* les cellobiohydrolases dérivées de *Thermoascus aurantiacus,* éventuellement associées à un domaine de liaison de cellulase de CBH1 dérivé de *Trichoderma reesei;* l'endoglucanase II dérivée de *Trichoderma reesei* et la bêta-glucosidase dérivée de *Chaetomium thermophilium*; la xylanase II dérivée de *Trichoderma reesei;* la xylanase xlnA dérivée de *Actinomadura flexuosa;* la xylanase xylA dérivée de *Chaetomium thermophilium*; les pectinases dérivées *d'Aspergillus niger* et *Trichoderma reesei;* les phospholipases de type A, B ou C dérivées d' *Aspergillus fumigatus, Aspergillus foetidus* ou *Thermomyces lanuginosus.*

4. Procédé selon l'une quelconque des revendications 1 à 3 **caractérisé en ce qu'**avant la pulvérisation de l'enzyme les graines sont décortiquées et broyées.

5. Procédé selon l'une quelconque des revendications 1 à 4, **caractérisé en ce que** l'enzyme est pulvérisé additionnellement entre les pressions individuelles sur les graines déjà pressées.

6. Procédé selon l'une quelconque des revendications 1 à 5, **caractérisé en ce qu'**on conduit une étape d'extraction après la pression.

7. Procédé selon l'une quelconque des revendications 1 à 6, **caractérisé en ce que** les graines de plantes sont choisies parmi les graines oléagineuses.

8. Procédé selon la revendication 7, **caractérisé en ce que** les graines oléagineuses sont choisies parmi les graines de soja, la cacahouète, les graines de coton, les graines de tournesol, les germes de mais et les graines de colza.

9. Utilisation d'un procédé selon l'une quelconque des revendications 1 à 8 dans la production d'huile de table.

10. Utilisation d'un procédé selon l'une quelconque des revendications 1 à 8 dans la production de biodiesel.
